# EUROPÄISCHE PATENTSCHRIFT

(11) **EP 1 516 291 B1**
(45) Veröffentlichungstag und Bekanntmachung des Hinweises auf die Patenterteilung: **13.12.2006**
(21) Anmeldenummer: 03756940.7
(22) Anmeldetag: 19.05.2003
(51) Int. Cl.: G07C 5/00, G01M 17/00, B60R 25/04

(54) **VERFAHREN UND VORRICHTUNG FÜR EINEN FAHRZEUGBEZOGENEN TELEMATIKDIENST**
METHOD AND DEVICE FOR A VEHICLE-RELATED TELEMATICS SERVICE
PROCEDE ET DISPOSITIF DESTINES A UN SERVICE TELEMATIQUE CONCERNANT UN VEHICULE

(30) Priorität: 10.06.2002 DE 10225788; 06.12.2002 DE 10257030
(43) Veröffentlichungstag der Anmeldung: 23.03.2005
(73) Patentinhaber: ROBERT BOSCH GMBH, 70442 Stuttgart (DE)
(72) Erfinder: SONNENREIN, Thomas, 31167 Bockenem (DE); BAUER, Norbert, 97616 Bad Neustadt (DE)
(86) Internationale Anmeldenummer: PCT/DE2003/001604
(87) Internationale Veröffentlichungsnummer: WO 2003/105093

(56) Entgegenhaltungen:
- EP-A- 0 718 614
- DE-A- 10 026 754
- US-B1- 6 181 994

## Beschreibung

### Stand der Technik

Die Erfindung betrifft ein Verfahren und Vorrichtung für einen fahrzeugbezogenen Telematikdienst wie das Einwirken auf wenigstens eine Funktionalität in einem Fahrzeug über eine Luftschnittstelle, z.B. ein Mobilfunknetz, insbesondere in Verbindung mit der Ferndiagnose von Kraftfahrzeugen.

Die zunehmende Vernetzung von Steuergeräten in heutigen Kraftfahrzeugen bietet immer bessere Einwirkungsmöglichkeiten auf Funktionalitäten im Kraftfahrzeug, z.B. bessere Diagnosemöglichkeiten im Fehlerfall oder Möglichkeiten zur Fernbedienung von Funktionen und/oder Komponenten des Fahrzeugs. In diesem Zusammenhang bestehen Konzepte, mit Hilfe eines mobilfunkgestützten Einwirkens zuverlässig und sicher auf die Funktionalität im Fahrzeug über beliebige Entfernungen hinweg zuzugreifen, beispielsweise über eine Ferndiagnose zuverlässige und qualitativ hochwertige Fehleranalysen durch ein Service-Center bzw. einen Ferndiagnose-Server, der eine entsprechende Diagnose-Datenbank umfasst, durchzuführen. Gemäß diesen Ansätzen werden im Fahrzeug integrierte Kommunikationssysteme wie beispielsweise Mobiltelefone und/oder GSM-gestützte Telematikendgeräte genutzt, um eine Datenübertragung zwischen den an ein Fahrzeugnetzwerk angeschlossenen Steuergeräten und/oder Komponenten und dem Server des Service-Centers durchzuführen. Einen Vorschlag für ein derartiges System beschreibt die DE 100 26 754 A1. Eine konkrete Realisierung hinsichtlich der Übertragungsinhalte zwischen Server und Endgerät sowie hinsichtlich der Ausgestaltung von Endgerät bzw. Server werden nicht angegeben.

Die DE 100 26 754 A1 (Oberbegriff von Anspruch 1) zeigt eine Funkanbindung eines Kraftfahrzeugs zu Diagnosezwecken als Wegfahrsperre und zur Aktivierung von Fahrzeugfunktionen von außen. Die Partitionierung der Funktionalitäten bleibt völlig offen.

Entsprechendes gilt für das US-Patent 6 181 994. Dieses zeigt Maßnahmen zur Ferndiagnose von Kraftfahrzeugen. Dabei sendet das Kraftfahrzeuge Daten, anhand derer die Diagnose durchgeführt werden kann, zu einer zentralen Einrichtung, die diese Daten auswertet und das Ergebnis zum Fahrzeug zurück überträgt. Auch hier ist die konkrete Partitionierung der Funktionalitäten offen.

Auch die EP 718 614 A2 beschäftigt sich mit dem Thema Ferndiagnose. Dabei werden im Fahrzeug die Diagnosedaten ausgewertet und eine aufbereitete Störungsmeldung an eine Zentrale übermittelt.

### Vorteile der Erfindung

Durch die Aufteilung der Funktionen, z.B. Diagnosefunktionen, zwischen Endgerät und Server (Partitionieren von Teilfunktionen) wird eine erhebliche Ressourcenersparnis im Fahrzeugendgerät erreicht. Besonders vorteilhaft ist, dass zeitunkritische, fahrzeugspezifische Funktionen, mit denen das Einwirken auf die ausgewählte Funktionalität gesteuert wird, nicht im Fahrzeugendgerät, sondern im Server vorgehalten werden und von diesem über die Luftschnittstelle übertragen werden. Dadurch wird vermieden, dass ein zusätzliches, speziell auf die Anwendung insbesondere hinsichtlich vom Fahrzeugnetzwerk vorgegebenen zeitlichen Randbedingungen zugeschnittenes Applikations-Protokoll für die Luftschnittstelle notwendig ist, so dass auf übliche Standard-Protokolle für die Luftschnittstelle zurückgegriffen werden kann. Ergänzend erlaubt die Übermittlung von fahrzeugspezifischen Informationen über die Luftschnittstelle eine einheitliche, parametrisierbare Funktionalität im Endgerät sowie eine fahrzeugunabhängige Implementierung im Endgerät. Eine besonders hohe Flexibilität des Systems wird erreicht, die sich auch sich ändernde Ausstattungen der Fahrzeuge anpassen kann.

Bei der Ferndiagnose sind Änderungen oder Verbesserungen im Bezug auf die Diagnose selbst, sofern diese nicht Onboard in den Steuereinheiten des Fahrzeugs ablaufen, im Server möglich. Dies betrifft vor allen den Ablauf und Umfang (übertragene Daten) des Ferndiagnosevorgangs.

Besondere Vorteile werden in Verbindung mit der Ferndiagnose erreicht, wenn die Kommandos des fahrzeugspezifischen Diagnose-Protokolls über die Luftschnittstelle vom Server zum Endgerät übertragen werden.

Durch die Ressourcenersparnis im Fahrzeugendgerät, insbesondere durch die Auslagerung zeitunkritischer Vorgänge in den Server des Service-Centers wird eine einfache und schnelle Umsetzung auf das Fahrzeugnetzwerk im Endgerät möglich.

Somit ergibt sich insgesamt eine effiziente und vor allem mit geringem Aufwand implementierbare Vorgehensweise zum Einwirken auf eine Fahrzeugfunktionalität, vor allem zur Ferndiagnose, Femwartung, Fernsteuerung, Software-Download, etc. bei Kraftfahrzeugen.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen anhand der Ferndiagnose eines Kraftfahrzeugs näher erläutert.
Figur 1 zeigt ein Prinzipbild eines Ferndiagnosesystems.
In Figur 2 ist als Übersichtsdarstellung die Aufteilung der Diagnosefunktionalität zwischen fahrzeugseitigem und serverseitigem Teil des Systems dargestellt. Insbesondere ergeben sich daraus auch Ausgestaltungen des Fahrzeugendgeräts bzw. des Servers des Service-Centers.
Figur 3 zeigt ein Ablaufdiagramm, welches den grundsätzlichen Ablauf der Ferndiagnose insbesondere im Hinblick auf die Übertragung zwischen Server und Endgerät sowie im Hinblick auf die Funktionen des Endgeräts bzw. des Servers in einem bevorzugten Ausführungsbeispiel darstellt.
Figur 4 zeigt die Kommunikation zwischen Server und Endgerät sowie zwischen Endgerät und zu diagnostizierendem Steuergerät sowie die in den jeweiligen Einheiten ablaufenden Vorgänge im Detail anhand eines bevorzugten Ausführungsbeispiels.

### Beschreibung von Ausführungsbeispielen

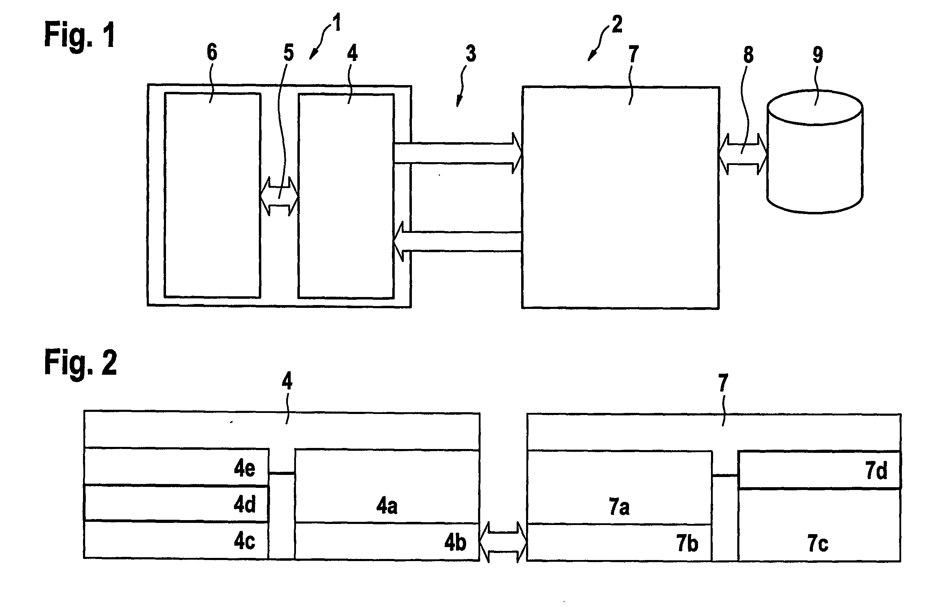

Figur 1 zeigt ein Übersichtsbild eines Systems für einen fahrzeugbezogenen Telematikdienst, wobei Informationen zwischen einem Fahrzeug (dort Endgerät) und einem Server über ein Mobilfunknetz bzw. über ein Datennetz, wie beispielsweise das Internet, ausgetauscht werden. Eine derartige Konfiguration wird in Verbindung mit Funktionen zur Fernwirkung, Ferndiagnose, Fernwartung, Software Download, etc. eingesetzt. Unter Fernwirkung bzw. Fernabfrage wird dabei im wesentlichen die Fernsteuerung von Fahrzeugfunktionen, insbesondere Komfortfunktionen wie das Einschalten der Standheizung, etc., sowie das Abfragen von Fahrzeugstati und/oder Betriebsparametern verstanden. Dabei initiiert der Nutzer eine Kommunikation mit dem Fahrzeug über einen zentralen Server oder er kommuniziert direkt mit dem Fahrzeug. Ferndiagnose umfasst das Fernauslesen von Diagnosedaten aus dem Fahrzeug, deren Analyse und ggf. das Erzeugen einer Empfehlung für das weitergehende Handeln. Analyse der Daten und Generierung der Empfehlung erfolgt dabei durch einen zentralen Server, der mit dem Fahrzeug über ein Mobilfunknetz, über ein drahtgebundenes Netz und/oder über ein Datennetz wie beispielsweise das Internet mit dem Kraftfahrzeug in Verbindung steht. Ferner ist in diesem Zusammenhang als Funktion der sogenannte Software-Download bzw. das Remote-Flashing zu nennen, mit deren Hilfe ein neuer Programmcode oder Parameter auf per Software konfigurierbare Systeme im Fahrzeug, beispielsweise Steuergeräte, aufgebracht werden, um die Funktionalitäten oder die Leistungsfähigkeit zu erhöhen. Auch hier erfolgt die Kommunikation über ein Mobilfunknetz, ein drahtgebundenes Netz und/oder beispielsweise das Internet ausgehend von einem zentralen Rechner (Server) bzw. Service-Center. Fernwartung stellt im wesentlichen die Überwachung des Fahrzeugzustandes und den Zugriff auf die Wartungsdaten im Fahrzeug von einer zentralen Stelle aus dar, um zu überprüfen, ob, wann und welche Maßnahmen zur Wahrung des Sollzustandes durchgeführt werden. Ein Beispiel hierfür ist das dynamische Anpassen von Wartungsintervallen. Allgemein werden diese Funktionalitäten hier unter dem Begriff des fahrzeugbezogenen Telematikdienstes subsumiert.

Figur 1 zeigt einen fahrzeugseitigen Teil 1 sowie einen serverseitigen Teil 2. Beide Teile sind über eine Kommunikationsschnittstelle 3, insbesondere eine Luftschnittstelle, beispielsweise über ein Mobilfunknetz miteinander verbunden. Der fahrzeugseitige Teil besteht aus einem Endgerät 4, beispielsweise einem Telematikendgerät, welches über eine weitere Schnittstelle 5 mit der Fahrzeugelektronik 6 verbunden ist. Der serverseitige Teil 2 besteht aus einem Server 7, welcher beispielsweise von einem Service-Center, dem Fahrzeughersteller oder einem Zulieferer betrieben wird, und der über eine Schnittstelle 8 mit einem Datenspeicher 9 in Verbindung steht, in dem beispielsweise im Rahmen einer Datenbank fahrzeugbezogene Daten und/oder Kommandos und/oder Programme abgelegt sind. Wie nachfolgend im Detail beschrieben, werden bei dem dargestellten Client-Server-System Teilfunktionen partitioniert, d.h. dem Server und den Client bestimmte Funktionalitäten eines Telematikdienstes zugeordnet. Dabei wird von einer vollständigen Vernetzung der zu diagnostizierenden bzw. zu steuernden Steuergeräte im Fahrzeug mit dem Endgeräts z.B. durch einen CAN-Bus sowie von der Verfügbarkeit der Schnittstelle 3, insbesondere einer Mobilfunkschnittstelle im Kraftfahrzeug, ausgegangen. Die bekannten, unterschiedlichen Verfahren für die Erfassung von Diagnosedaten, beispielsweise über eine CAN-Bus-Schnittstelle, lassen sich in nichtzeitkritische und zeitkritische Anwendungen aufteilen. Zu den nichtzeitkritischen Anwendungen gehört beispielsweise die Ablaufsteuerung des Diagnose-Testers, mit Zugriff auf eine Datenbank, sowie das Diagnose-Protokoll selbst, beispielsweise das Protokoll KWP2000 bzw. Varianten davon. Zeitkritische Anwendungen sind das Transport-Protokoll des Fahrzeugnetzes (z.B. CAN-Transport-Protokoll) oder Varianten davon, dessen Kommunikationsschicht (z.B. CAN-Kommunikationsschicht) sowie der Bus (z.B. CAN-Bus) selbst. Wesentlich ist, dass bei der Implementierung der Telematikfunktion im Kraftfahrzeug die zeitkritischen Vorgänge gegenüber dem unsichereren Mobilfunkkanal entkoppelt werden. Daher werden alle oder ein Teil der relevanten Funktionen aus dem Fahrzeug ausgelagert, bei denen keine engen zeitlichen Anforderungen bestehen, insbesondere Anforderungen bezügliche einer minimalen oder maximalen Zeitdauer zwischen Kommando und Antwort bei einer Datenübertragung. Im Extremfall bleibt daher lediglich der zeitkritische Datentransport auf dem Fahrzeug-Bus (z.B. CAN-Bus oder Ähnliches), welcher durch Funktionen des Transport-Protokolls wie beispielsweise die Fragmentierung und Defragmentierung komplexer Nachrichten, realisiert ist, auf der Client- bzw. Fahrzeugseite zurück. Der Funktionsumfang des in der Regel komplexeren und fahrzeugspezifischen Dienste-Protokolls (z.B. Diagnoseprotokoll) wird dabei auf einen entsprechenden Server (z.B. Diagnoseserver) ausgelagert. Im Anwendungsfall der Ferndiagnose werden neben der Übertragung fahrzeugspezifischer Diagnose-Kommandos auf der Basis des jeweils verwendeten Diagnose-Protokolls ferner zusätzliche Informationen zwischen der Server-Applikation (Ablaufsteuerung für den Gesamtvorgang) und der Client-Applikation (Ablaufsteuerung zur Datenerfassung) übertragen. Diese Ablaufsteuerungen dienen der Aktivierung des Diagnosevorgangs, der Konfiguration der Client-Applikation und der späteren Übermittlung von Ergebnissen der serverseitigen Datenanalyse. In dem skizzierten Beispiel, bei dem alle zeitunkritischen Vorgänge aus dem fahrzeugseitigen Teil in den serverseitigen Teil des Systems ausgelagert wurden, ergibt sich die in Figur 2 dargestellte Systemarchitektur. In anderen Ausführungen wird nur ein Teil der nichtzeitkritischen Vorgänge ausgelagert, während ein Teil im fahrzeugseitigen Endgerät verbleibt. So ist beispielsweise vorstellbar, dass fahrzeugspezifische Daten und/oder spezielle fahrzeugspezifische Diagnose-Kommandos, die aus Sicherheitsgründen nicht ausgelagert werden, im fahrzeugseitigen Teil des Systems verbleiben.

In Verbindung mit anderen Telematikdiensten wie der Fernsteuerung von Komponenten, den Softwaredownload, etc. wird auf die geschilderte Art und Weise zeitunkritische Anwendungen ausgelagert, während zeitkritische Anwendungen im Fahrzeugendgerät verbleiben.

In Figur 2 ist das Fahrzeugendgerät (Client) 4 sowie der Server 7 dargestellt, welche über eine Luftschnittstelle 3 miteinander verbunden sind. Im bevorzugten Ausführungsbeispiel handelt es sich bei der Luftschnittstelle 3 um ein herkömmliches, beispielsweise auf dem GSM-Standard basierendes Mobilfunknetz. In anderen Anwendungen handelt es sich um Mobilfunknetze, die mit anderen Standards arbeiten. Der Server umfasst die folgenden Module: ein Mobilfunk-Kommunikations-Protokoll-Modul 7a, ein Mobilfunkkommunikation-Modul 7b, ein Ablaufsteuerungs-Modul 7c sowie ein fahrzeugspezifisches Diagnose-Protokoll-Modul 7d. Das Fahrzeugendgerät umfasst ebenfalls ein Kommunikations-Protokoll-Modul 4a, ein Modul 4b zur Kommunikation über die Mobilfunkschnittstelle, ein Modul 4c zur CAN-Kommunikation sowie ein Transport-Protokoll-Modul 4d. Ferner ist eine Ablaufsteuerung 4e im Fahrzeugendgerät vorgesehen. Die Module stellen dabei vorzugsweise Softwareprogramme dar.

Diese Funktionseinheiten haben die folgenden Aufgaben:

Die Mobilfunkkommunikations-Module 4b, 7b, die sowohl im Endgerät als auch im Server vorgesehenen sind, diesen zur stabilen Datenübertragung, zum Verbindungsaufbau bzw. -abbau, der Datensicherheit, gegebenenfalls der Verschlüsselung, Packetierung, etc. Diese Aufgaben werden von üblichen Kommunikationsfunktionseinheiten realisiert und sind z.B. im Rahmen der GSM-Standards verfügbar.
Das im Fahrzeugendgerät vorgesehene CAN-Kommunikation-Modul 4c stellt eine hardwareunabhängige Softwareschnittstelle zur Übertragung von Daten über einen CAN-Bus zu angeschlossenen Steuergeräten dar. Dazu gehören die Initialisierung und Steuerung des CAN-Controllers, die Übertragung und den Empfang von CAN-Bausteinen sowie Überlauf-Fehlerbehandlungen und Weckfunktionen. Ferner umfasst das Modul die Funktionen der OSI-Layer 1 und 2 (Physical Layer, Data Link Layer). Das Softwaremodule arbeitet dabei im Rahmen der gültigen CAN-Spezifikation. In anderen Ausführungen wird anstelle des CAN-Bus ein anderes Bussysteme eingesetzt (standardisiert oder kundenspezifisch), wobei das Softwaremodul dann auf der Basis einer entsprechenden Spezifikation realisiert ist.

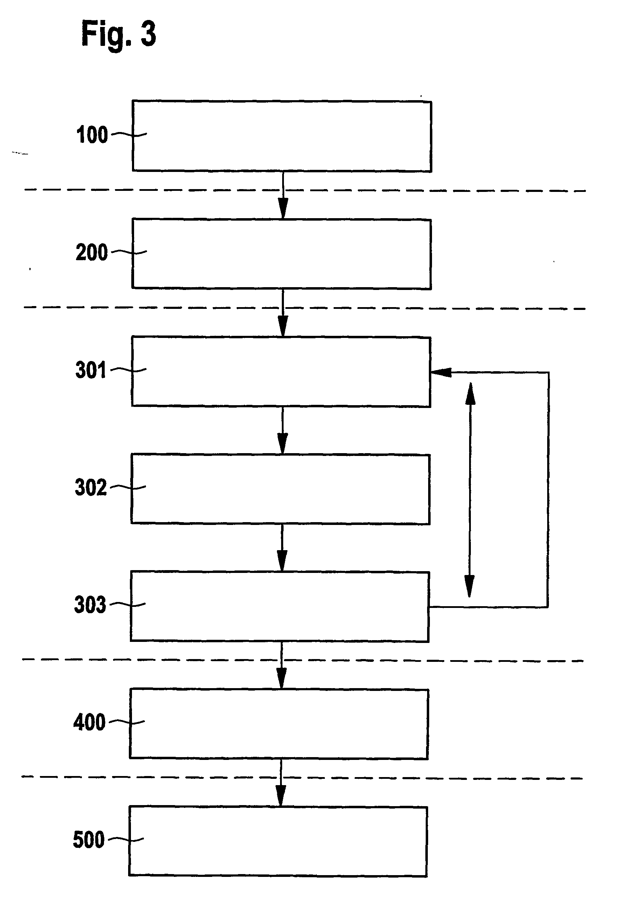

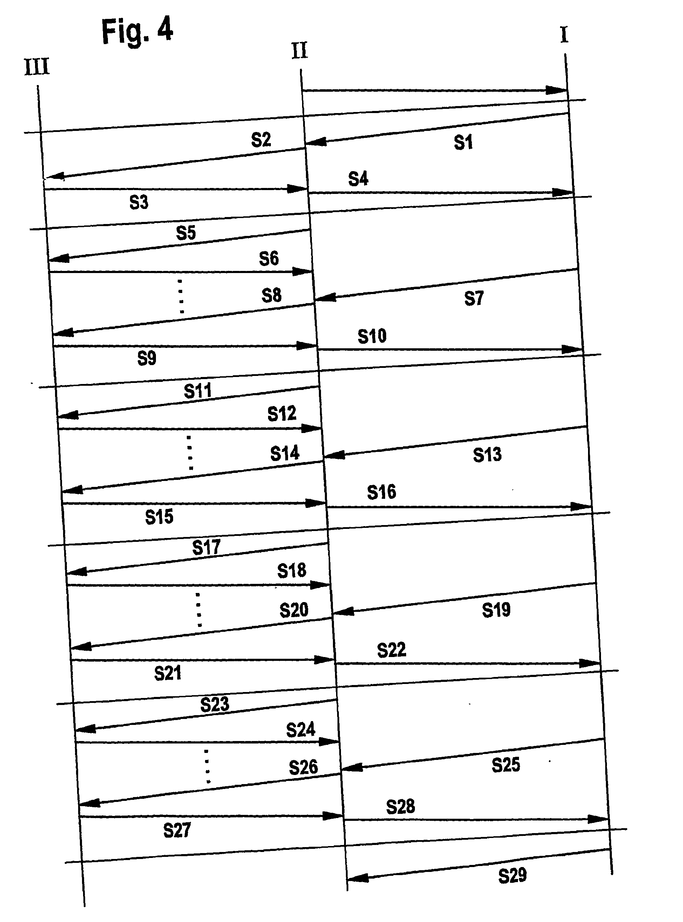

Die Ablaufsteuerung 7c im Server zerlegt die Diagnose-Grundfunktionen in einzelne Teilprozesse bzw. Diagnose-Services, übernimmt die Initialisierung des Prozesses, steuert und beendet den Diagnosevorgang, verarbeitet die erforderlichen Parameter- und gegebenenfalls Protokoll-Mechanismen für den Diagnosevorgang und steuert den Gesamtvorgang zeitlich. Ferner werden hier die ermittelten Diagnosedaten ausgewertet, gegebenenfalls eine Generierung einer Empfehlung durchgeführt. Ferner übernimmt die Ablaufsteuerung den Zugriff auf die Diagnose-Datenbank des Servers. Die Ablaufsteuerung stellt ein Software-Modul dar, welches für die spezielle Anwendung konzipiert ist. Ein Beispiel wird nachfolgend anhand der Ferndiagnose in den Figuren 3 und 4 skizziert.

In entsprechender Weise ist ein Ablaufsteuerungs-Modul 4e im Fahrzeugendgerät vorgesehen. Auch dieses Software-Modul ist für die spezielle Anwendung konzipiert. Ein Beispiel wird nachfolgend anhand der Ferndiagnose in den Figuren 3 und 4 skizziert. Diese Ablaufsteuerung erzeugt eine Server-Anfrage zur Durchführung einer Ferndiagnose. Sie konfiguriert die Funktionen im Fahrzeug, beispielsweise durch Festlegen einer Tester-Present-Nachricht, Einstellen der Timing-Parameter für das Transport-Protokoll und gegebenenfalls Einstellen der Parameter für die CAN-Kommunikation. Die Ablaufsteuerung führt ferner die Diagnose-Kommunikation durch zyklisches Generierung von Tester-Present-Nachrichten mit den zu diagnostizierenden Steuereinheiten durch. Ferner werden von ihr die vom Server übertragenen Diagnose-Kommandos auf das CAN-Transport-Protokoll umgesetzt. Darüber hinaus überträgt das Ablaufdiagramm die Daten an den Server und setzt zu diesem Zweck die im Fahrzeug ermittelten Diagnose-Daten auf die Mobilfunkschnittstelle um. Darüber hinaus sind Maßnahmen getroffen, mit denen in einem Ausführungsbeispiel die bewerteten Ergebnisse der Fehleranalyse, die vom Server übermittelt werden, angezeigt werden. Ferner übernimmt die Ablaufsteuerung die Beendigung der Diagnose-Kommunikation durch Stoppen der Generierung von Tester-Present-Nachrichten. Darüber hinaus wird in einem Ausführungsbeispiel das automatische Beenden eines unterbrochenen Diagnosevorgangs, z.B. durch Timeout oder Watchdog für den Empfang von Server-Kommandos, durchgeführt.

Das im Client 4 vorgesehene Transport-Protokoll-Modul 4d führt die Übertragung von komplexen Nachrichten oder Dateneinheiten über einen CAN-Bus durch, nimmt die Entkopplung des Diagnose-Protokolls vom physikalischen Übertragungsmedium vor und stellt die Dienste des OSI-Layers 3 (Network Layer) zur Verfügung, sowie die Verbindung zwischen dem OSI-Layer 2 (Data Link Layer) und 7 (Applikation Layer). Es werden als also vom Transport-Protokoll-Modul eine Segmentierung und Erfassung von Daten des Data Link Layers vorgenommen, das heißt die Steuerung des Datenflusses einzelner Botschaften inklusive Verwaltung und Zuordnung von physikalischen CAN-Botschaften zu logischen Nachrichten oder Dateneinheiten sowie die Fehlererkennung. Eine Realisierung stellt das allgemein verbreitete ISO-Transport-Protokoll (ISO 15765-2) dar, wobei in anderen Anwendungen auch spezielle Varianten dieses Protokolls eingesetzt werden. Dies gilt auch bei der Verwendung anderer Bussysteme zur Kommunikation mit den Fahrzeugsteuergeräten.

Das dem Server zugeordnete Diagnose-Protokoll-Modul 7d umfasst die Diagnoseschicht, welche in einer bevorzugten Anwendung das nach ISO spezifizierte Diagnose-Protokoll KWP2000 enthält, wobei je nach Ausführungsbeispiel auch Varianten davon eingesetzt werden. In diesem Diagnose-Protokoll-Modul sind spezielle Diagnose-Dienste definiert, die je nach Kraftfahrzeughersteller und/oder Kraftfahrzeugtyp unterschiedlich genutzt werden und zum Teil unterschiedliche Zusatzdienste enthalten. Das Diagnose-Protokoll-Modul wertet die Diagnose-Anfragen aus. Weitere Aufgaben, die durch das Modul gelöst werden, sind die Konvertierung von Diensten in eine funktionale Schnittstelle für die Anwendungsschicht, die direkte Nutzung spezieller Dienste und die Ausnahmebehandlung bei Nutzung von unbekannten Diensten. Ein Beispiel für die Realisierung eines solchen Modul ist aus den nachfolgend beschriebenen Vorgehensweisen entnehmbar.

Die grundsätzliche Vorgehensweise im Rahmen der Ferndiagnose besteht darin, dass nach Aktivierung der Ferndiagnose durch eine Bedienperson, z.B. den Nutzer des Kraftfahrzeugs, und/oder den Service-Provider und/oder den Fahrzeughersteller und/oder eines Monteurs einer Werkstatt nach Abschluss der Maßnahmen zum Verbindungsaufbau zwischen Endgerät und Server die Kommandos des fahrzeugspezifischen Diagnose-Protokolls über die Luftschnittstelle vom Server zum Endgerät übertragen werden. Die fahrzeugspezifischen Diagnose-Protokoll-Kommandos werden dabei vom Diagnose-Server nach Identifizierung des zu diagnostizierenden Kraftfahrzeugs aus einer Datenbank ausgelesen. Das Endgerät setzt die übertragenen Diagnose-Kommandos auf das Fahrzeugnetzwerk um. Die erfolgt beispielsweise dadurch, dass die empfangenen Kommandos in Kommandos für das diagnostizierende Steuergerät umgesetzt werden und über die Schnittstelle zum Fahrzeugnetzwerk, insbesondere über einen CAN-Bus, an das Steuergerät gesendet werden. Die Antwort dieses Steuergeräts wird als Datennachricht aus dem Fahrzeugnetzwerk im entsprechenden Format über die Fahrzeugnetzwerkschnittstelle empfangen und wird dann vom Endgerät in Antwortnachrichten für den Server umgesetzt. Diese werden dann an die Mobilfunkschnittstelle übermittelt, die die Nachricht über ein vorgesehenes Übertragungs-Protokoll (beispielsweise im Rahmen des GSM-Standards) an den Server geschickt wird. Zusammenfassend setzt der Client im bevorzugten Ausführungsbeispiel also das vom Server übertragene Diagnose-Protokoll (KWP2000) auf das CAN-Transport-Protokoll um und umgekehrt. Die Ablaufsteuerung des beschriebenen Vorgangs zur Aufrechterhaltung der Diagnose-Kommunikation im Fahrzeug erfolgt im Endgerät autark, beispielsweise durch sogenannte Tester-Present-Nachrichten. Diese sind in der KWP2000-Spezifikation definiert und dienen der Erfüllung der zeitlichen Anforderungen der Fahrzeugnetzwerkes. Dadurch wird eine Entkopplung der zeitkritischen Diagnose-Kommunikation im Fahrzeug von den zeitunkritischen Diagnoseabläufen im Server erreicht. Ergebnis ist somit eine flexible Konfiguration der fahrzeugspezifischen Diagnose-Kommunikation im Fahrzeug, die nicht durch mögliche Probleme der Luftschnittstelle und der Diagnoseabläufe im Server belastet ist.

Figur 3 zeigt ein Ablaufdiagramm des Gesamtvorgangs, der in fünf grundlegende Teilschritte gegliedert ist. Die detaillierten Abläufe innerhalb eines solchen Teilvorgangs sind je nach Fahrzeugtyp, dem möglicherweise vorliegenden Fehlerfall und/oder der jeweiligen Implementierung des Systems im Diagnose-Server variierbar. Im ersten Schritt 100 erfolgt das Starten der Diagnose mit einer entsprechenden Anfrage an den Server. Die Aktivierung erfolgt dabei im bevorzugten Ausführungsbeispiel durch den Fahrer bzw. Nutzer des Kraftfahrzeugs der durch Anruf oder Ähnliches beim Service-Center eine Aufforderung des Servers an den Client im Fahrzeug erzeugt, eine Diagnose-Verbindung aufzubauen. Der Client baut dann die angeforderte Verbindung auf. In anderen Ausführungsbeispielen wird die Diagnose-Verbindung durch eine Anfrage vom Client aus aufgebaut. Der Aufbau der eigentlichen Diagnose-Verbindung erfolgt hier durch den Server oder den Client. Im nächsten Schritt 200 erfolgt die Konfiguration der Ferndiagnose-Funktionalität im Fahrzeug durch den Server. Dabei wird die Ablaufansteuerung, die Transportschicht und gegebenenfalls die CAN-Kommunikation an das spezifische Fahrzeug angepasst. Dies erfolgt durch Kommandos bzw. Daten vom Server, die dieser aus einer Datenbank für das spezielle Fahrzeug bzw. Fahrzeugtyp /und/oder Austattungsvariante ausliest. Bei der Aktivierung erhält der Server beispielsweise mittels eines Identifikadonscodes Informationen über das zu diagnostizierende Fahrzeug. Anhand dieser Information liest er fahrzeugspezifische Parameter aus der Datenbank aus, die er dann an den Client zur Konfiguration der Ferndiagnose-Funktionalität übermittelt.

Nach den Teilschritten Aktivierung (100) und Initialisierung (200) wird der Teilschritt Ausführung des Diagnosevorgangs (301 bis 303) an einem Beispiel eines Steuergeräts gezeigt. Zunächst wird im Schritt 301 durch den Server im zu diagnostizierenden Steuergerät, sofern dies notwendig ist, der Diagnosemode angestoßen, so dass das Steuergerät zum Ausführen der Diagnose-Funktion in der Lage ist. Ferner erfolgt die Identifikation des Steuergerät, z.B. dessen Softwarestand zur Anpassung der Diagnose-Kommandos an den speziellen Steuergerätetyp. Auch dies ist optional und wird dann eingesetzt, wenn dies z.B. aufgrund der Vielzahl von Softständen sich als erforderlich erweist. Danach werden die ausgewählten Diagnose-Kommandos vom Server an den Client im Fahrzeug übertragen. Beispiele für solche Diagnose-Kommandos sind das Auslesen wenigstens eines Fehlerspeichers des betroffenen Steuergeräts, das Auslesen von gespeicherten Umgebungs-Parameter eines aufgetretenen Fehlers und/oder das Abfragen von zusätzlichen Ist-Werten aus dem entsprechenden Steuergerät.

Im Schritt 302 setzt der Client das oder die übermittelten Diagnose-Kommandos auf das Fahrzeugnetzwerk um. Im darauf folgenden Schritt 303 wird die Antwort des Steuergeräts auf das oder die gesendeten Kommandos, welche beispielsweise innerhalb einer bestimmten Zeitperiode auftreten muss, empfangen, vom Client über auf die Übertragungsschnittstelle zum Server umgesetzt und an diesen zurückgesendet. Die Schritte 301 bis 303 werden dann für jedes zu diagnostizierende Steuergerät oder, wenn die Diagnosekommandos einzeln nacheinander oder in Gruppen nacheinander versendet werden, für jedes einzelne Diagnose-Kommando oder Diagnose-Kommando-Gruppe wiederholt. Ist die Diagnose für ein Steuergerät beendet, wird als Diagnose-Kommando ein Ende-Kommando gesendet, welches ggf. den Diagnose-Mode im Steuergerät deaktiviert und dieses wieder in den normalen Betriebsmode zurückversetzt.

Der vierte Teilschritt betrifft die Auswertung der erhaltenen Daten im Server (Schritt 400). Der Server wertet der nach Maßgabe eines ggf. spezifischen Algorithmus die gesammelten Fehlerinformationen aus, ermittelt ein Diagnose-Ergebnis und/oder Empfehlungen für das weitere Vorgehen. Im darauf folgenden Schritt 500 werden dann die vom Server ermittelten Ergebnisse an das Endgerät übertragen und von diesem im Fahrzeug angezeigt. Dieser fünfte Teilschritt stelle somit die Ergebnisausgabe dar. Im diesem Schritt ist auch in einem Ausführungsbeispiel die Übermittlung und Anzeige einer Empfehlung für das weitere Vorgehen im Fehlerfall vorgesehen, z.B. "Werkstatt aufsuchen", etc.

Figur 4 zeigt ein beispielhaftes Kommunikationsszenario zwischen einem Ferndiagnose-Server, einem Telematikendgerät und einem Steuergerät. Das Kommunikationsszenario stallt eine Realisierung des dritten Teilschritt in Figur 3 im Detail dar. Basis der Kommunikation ist das nach ISO 14230-3 spezifizierte Diagnose-Protokoll KWP2000. In anderen Ausführungsbeispielen werden herstellerspezifische Varianten dieses Diagnose-Protokolls oder auch andere Diagnose-Protokolle entsprechend eingesetzt. Je nach Ausführungsbeispiel variiert die Abfolge der Schritte und der Umfang der Schritte in den einzelnen Anwendungen. Figur 4 zeigt eine bevorzugte Realisierung der Kommunikation zwischen einem Ferndiagnose-Server I, einem im Fahrzeug angeordneten Telematikendgerät II und einem zu diagnostizierenden Steuergerät III. Die Kommunikation basiert dabei auf dem Diagnose-Protokoll KWP2000, welches in der ISO 14230-3 spezifiziert ist. Die Fehlerermittlung und das Setzen der Fehlerspeicher erfolgt dabei in den meisten Fälle durch bekannte Diagnosemethoden im zu diagnostizierenden Steuergerät durch dort vorhandene oder dort eingelesene Software.

In Figur 4 sind die einzelnen einer Kommunikation zwischen den drei beteiligten Einheiten dargestellt, wobei von oben nach unten eine zeitliche Reihenfolge ausgedrückt sein soll. In den Einheiten sind Softwareprogramme vorhanden, die die zu übermittlenden Nachrichten erzeugen, auswerten, etc.

Nach Abschluss der Teilvorgänge 1 und 2 (siehe Figur 3, Schritte 100 und 200) wird in einem ersten Schritt S1 der Diagnose-Mode im zu diagnostizierenden Steuergerät aktiviert. Dazu sendet der Server ein entsprechendes Diagnose-Kommando (Start-Diagnostic-Session-Request). Dieses wird vom Endgerät empfangen und über die Schnittstelle zum diagnostizierenden Steuergerät weitergeleitet (Schritt S2) bzw. zuerst in ein für das Fahrzeugnetz geeignetes Format umgesetzt (z.B. mittels einer Tabelle) und dann auf das Fahrzeugnetz gegeben. Das zu diagnostizierende Steuergerät antwortet mit einer entsprechenden Antwort (Start-Diagnostic-Session-Response), die angibt, ob der Diagnose-Mode eingeleitet ist oder nicht. Diese Information sendet das zu diagnostizierende Steuergerät im Schritt S3 zum Endgerät, welches wiederum im Schritt S4 (ggf. nach Umsetzung auf das vorgesehene Format) die Information zum Server überträgt.

Daraufhin wird zur Ablaufsteuerung und zur Erfüllung der Zeitanforderung im Fahrzeugnetz vom Endgerät II zum Steuergerät III im Schritt S5 eine Kommando geschickt (Tester-Present-Request), welches im Schritt S6 von Steuergerät mit einer entsprechenden Antwort (Tester-Present-Response) beantwortet wird. Diese Kommunikation wird im folgenden während des Diagnosevorgangs dann ausgeführt, wenn vom Server kein anderes Diagnose-Kommando weiterzuleiten ist bzw. vom Steuergerät keine Antwort an den Server zu leiten ist. Daher können die Schritte S5 und S6 auch mehrfach wiederholt werden, solange bis das erwartete Kommando vom Server empfangen wird. Tritt eines der genannten Ereignisse nicht auf, wird die Kommunikation zwischen Endgerät und Steuergerät abgebrochen.

Nach Empfang der Antwort im Schritt S4 sendet der Server im Schritt S7 ein Kommando (Read ECU-Identification-Request), welches die Identifkation des zu diagnostierenden Steuergeräts anfragt. Dieses Kommando wird vom Endgerät empfangen und ggf. umgesetzt und dann im Schritt S8 zum Steuergerät übermittelt. Das Steuergerät liest aus seinem Speicher daraufhin wenigstens einen Identifikationsparameter aus und sendet diesen zum Endgerät (Read ECU-Identification-Response, Schritt S9). Diese Information wird dann ggf. nach Umsetzung vom Endgerät II im Schritt S 10 an den Server übertragen. Anhand des Identifikationsparameters erkennt der Server das Steuergerät, gegebenenfalls dessen Software-Stand sowie gegebenenfalls das Fahrzeug und wählt aus der Datenbank entsprechende Parameter aus. In der Zwischenzeit läuft, wie anhand der Schritte S11 und S 12 dargestellt, zwischen Endgerät und zu diagnostizierenden Steuergerät die oben beschriebene Tester-Present-Kommunikation ab, die sicherstellt, dass die Kommunikation zwischen Endgerät und Steuergerät aufrechterhalten bleibt, das Steuergerät im Diagnosemode verbleibt und keine Verletzung der Randbedingungen für die Kommunikation im Fahrzeugsnetz, die zum Abbruch führt, erfolgt.

In den nächsten Schritten werden die Fehlerspeicher des zu diagnostizierenden Steuergeräts ausgelesen. Dazu übermittelt der Server nach Empfang der Nachricht im Schritt S10 und Auslesen der steuergerätspezifischen Parameter zum Endgerät im Schritt S 13 eine entsprechende Anfrage (Read DTC-Request). In dieser Anfrage sind die steuergerätspezifischen Parameter enthalten, in denen z.B. angegeben ist, welche Fehlerspeicher auszulesen sind. Diese Anfrage wird im Schritt S14 von Endgerät ggf. nach Umsetzung zum Steuergerät übertragen. Das Steuergerät führt die empfangenen Kommandos aus und sendet die Fehlerspeicherinhalte als Botschaft Read DTC-Response im Schritt S 15 zum Endgerät. Die Botschaft Read DTC-Response enthält demnach die relevanten Fehlerspeicherinhalte. Die Antwort wird vom Endgerät ggf. nach Umsetzung im Schritt S 16 zum Server übertragen. Daraufhin wird in den Schritten S 17 und S 18 die oben erwähnte Tester-Present-Kommunikation zwischen Endgerät und Steuergerät bis zum erneuten Empfang einer Botschaft vom Server durchgeführt.

Im darauf folgenden, optionalen Teilschritt werden die zu den Fehlereinträgen gehörige Umgebungsparameter ausgelesen. Zu diesem Zweck sendet der Server nach Empfang der Botschaft im Schritt S16 und nach Auswertung der Fehlereinträge im Schritt S19 an das Endgerät eine entsprechende Anfrage (Read-Freeze Frarne-Request), die dieses ggf. nach Umsetzung im Schritt S20 an das Steuergerät weitergibt. Je nach Ausführung liest das Steuergerät dann die gewünschten Parameter zu den gespeicherten Fehlern aus oder der Server spezifiziert anhand der Inhalte der Fehlerspeicher den Inhalt seiner Botschaft, so dass mit dieser Botschaft nur bestimmte Umgebungsparameter angefordert werden. Das Steuergerät jedenfalls antwortet mit einer entsprechenden Antwort (Read-Freeze Frame-Response), in welchem die auf die eine oder andere Weise angeforderten Parameter enthalten sind. Im Schritt S21 wird die Antwort an das Endgerät gesendet, welches die Antwort wiederum ggf. nach Umsetzung im Schritt S22 zum Server überträg. In den Schritten S23 und S24 erfolgt erneut die Tester-Present-Kommunikation.

Im darauf folgenden Teilschritt, nach dem Fehlerspeicher und zugehörige Umgebungsparameter ausgelesen und übertragen sind, wird der Diagnosemode im Steuergerät deaktiviert. Hierzu schickt der Server eine Aufforderung zum Beenden die Diagnosevorgangs (Stop-Diagnostic-Session-Request) an das Endgerät. Dieses gibt die Aufforderung zum Beenden an das Steuergerät weiter (Schritt S26), welches mit einem entsprechenden Antwortsignal (Stop-Diagnostic-Session-Response) im Schritt 27, mit welcher das Steuergerät die Beendigung des Diagnose-Modus mitteilt, antwortet. Diese Information wird vom Endgerät im Schritt S28 zum Server übertragen. Daraufhin (Schritt S29) werden die oben dargestellten Teilvorgänge 4 und 5 bezüglich Auswertung und Anzeige der Diagnose-Ergebnisse und ggf. -Empfehlungen weitergeführt.

Das dargestellte Kommunikationsszenario ist ein Beispiel. In anderen Ausführungen fehlen die Schritte zum Aktivieren und Deaktivieren des Diagnose-Modes im Steuergerät und/oder zur Identifikation des Steuergeräts und/oder zum Auslesen der zugehörigen Umgebungsparameter.

Die konkrete technische Realisierung der dargestellten Kommunikation findet durch entsprechende Software-Programme in Server, Endgerät und Steuergerät statt, die jedes für sich ebenfalls Teil der vorliegenden Erfindung sind.

## Patentansprüche

1. Verfahren für einen fahrzeugbezogenen Telematikdienst, mit einem Endgerät (4), welches in einem Kraftfahrzeug angeordnet ist, und welches mit einem Zentralrechner (7) eine Kommunikationsverbindung (3) aufbaut, wobei der Telematikdienst in Teilfunktionalitäten aufgeteilt ist, **dadurch gekennzeichnet, dass** das Endgerät (4) über ein Kommunikationsmodul (4c) an ein Bussystem im Kraftfahrzeug zur Übertragung von Daten zu Steuergeräten angeschlossen ist und daß der Telematikdienst derart aufgeteilt ist, dass Zeitkritische Funktionalitäten, für deren Datenübertragung vorgegebene Zeitliche Anforderungen bestehen auf dem Bussystem im Kraftfahrzeug ablaufen, während Funktionalitäten eines fahrzeugspezifischen Dienste-Protokolls, z.B. Diagnoseprotokolls, auf den Zentralrechner (7) ausgelagert sind.

2. Verfahren nach einem der vorhergehenden Ansprüche, **dadurch gekennzeichnet, dass** die Teilfunktionalitäten für den zeitkritischen Datentransport auf dem Bussystem autark im Endgerät (4) ablaufen, die Teilftmktionalitäten des fahrzeugspezifischen Dienste-Protokolls vom Zentralrechner (7) mittels Kommunikation mit dem Endgerät durchgeführt werden.

3. Verfahren nach einem der vorhergehenden Ansprüche, **dadurch gekennzeichnet, dass** im Endgerät (4) die Kommunikation mit einem zu diagnostizierenden Steuergerät (6) und/oder einer zu diagnostizierenden Komponenten implementiert ist.

4. Verfahren nach einem der vorhergehenden Ansprüche, **dadurch gekennzeichnet, dass** der Telematikdienst eine Ferndiagnose eines Kraftfahrzeugs ist und dass das Diagnose-Protokoll im Zentralrechner (7) implementiert ist.

5. Verfahren nach einem der vorhergehenden Ansprüche, **dadurch gekennzeichnet, dass** Kommandos des fahrzeugspezifischen Diagnose-Protokolls über eine Luftschnittstelle (3) vom Zentralrechner (7) zum Endgerät (4) übertragen wird.

6. Verfahren nach einem der vorhergehenden Ansprüche, **dadurch gekennzeichnet, dass** das Endgerät (4) die übertragenen Diagnose-Kommandos auf ein Fahrzeugnetzwerk umsetzt und die erzeugten Antwortnachrichten an die Mobilfunkschnittstelle übermittelt.

7. Verfahren nach einem der vorhergehenden Ansprüche, **dadurch gekennzeichnet, dass** als Diagnose-Protokoll KWP2000 oder eine Variante davon eingesetzt wird.

8. Vorrichtung für einen fahrzeugbezogenen Telematikdienst, mit einem Endgerät (4), welches in einem Kraftfahrzeug angeordnet ist, und welches eine Kommunikationsverbindung (3) mit einem Zentralrechner (7) aufweist, und der Telematikdienst in Teifunktionalitaten aufgeteilt ist, **dadurch gekennzeichnet, dass** das Endgerät (4) ein Kommunikationsmodul (4c) umfasst, über welches es an ein Bussystem im Kraftfahrzeug zur Übertragung von Daten zu steuergeräten anschließt und daß der Telematikdienst derart aufgeteilt ist, dass zeitkritische Funktionalitäten, für deren Daten übertragung vorgegebene seitliche Anforderungen bestehen, auf dem Bussystem im Fahrzeug (4) ablaufen, während Funktionalitäten eines fahrzeugspezifschen Dienste-Protokolls, z.B Diagnoseprotokolls, auf den Zentralrechner (7) ausgelagert sind.

9. Vorrichtung nach Anspruch 8, wobei der Zentralrechner (7) über eine Luftschnittstelle (3) mit dem Endgerät (4) kommuniziert, **dadurch gekennzeichnet, dass** der Telematikdienst eine Ferndiagnose eines Kraftfahrzeugs ist, wobei das Diagnose-Protokoll im Zentralrechner (7) implementiert ist.

10. Vorrichtung nach einem der vorhergehenden Ansprüche, wobei das Endgerät (4) über eine Luftschnittstelle (3) mit dem Zentralrechner (7) kommuniziert und welches eine weitere Schnittstelle (5) umfasst, mit dem es mit einer zu diagnostizierenden Einheit (6) verbunden ist, **dadurch gekennzeichnet, dass** das Endgerät (4) eine Ablaufsteuerung umfasst, die autark gegenüber dem Zentralrechner (7) ist und die die Diagnose-Kommunikation im Fahrzeug aufrecht erhält.

11. Computerprogramm mit Programmcode-Mitteln, um alle Schritte von jedem beliebigen der Ansprüche 1 bis 7 durchzuführen, wenn das Programm auf einem Computer ausgeführt wird.

12. Computerprogrammprodukt mit Programmcodemitteln, die auf einem computerlesbaren Datenträger gespeichert sind, um das Verfahren nach jedem beliebigen der Ansprüche 1 bis 7 durchzuführen, wenn das Programmprodukt auf einem Computer ausgeführt wird.

## Claims

1. Method for a vehicle-related telematics service, having a terminal (4) which is arranged in a motor vehicle and which sets up a communications link (3) to a CPU (7), the telematics service being divided into component functionalities, **characterized in that** the terminal (4) is connected via a communications module (4c) to a bus system in the motor vehicle for transmitting data to control units, and **in that** the telematics service is divided in such a way that time-critical functionalities for whose data transmission there are prescribed chronological requirements run on the bus system in the motor vehicle, while functionalities of a vehicle-specific service protocol, for example a diagnostic protocol, are exported to the CPU (7).

2. Method according to one of the preceding claims, **characterized in that** the component functionalities for the time-critical data transfer on the bus system run autonomously in the terminal (4), and the component functionalities of the vehicle-specific service protocol are carried out by the CPU (7) by means of communication with the terminal.

3. Method according to one of the preceding claims, **characterized in that** the communication with a control unit (6) on which diagnostics are to be performed and/or a component on which diagnostics are to be performed is implemented in the terminal (4).

4. Method according to one of the preceding claims, **characterized in that** the telematics service is remote diagnostics performed on a motor vehicle, and **in that** the diagnostic protocol is implemented in the CPU (7).

5. Method according to one of the preceding claims, **characterized in that** commands of the vehicle-specific diagnostic protocol are transmitted from the CPU (7) to the terminal (4) via an air interface (3).

6. Method according to one of the preceding claims, **characterized in that** the terminal (4) transfers the transmitted diagnostic commands to a vehicle network and transmits the generated response messages to the mobile radio interface.

7. Method according to one of the preceding claims, **characterized in that** KWP2000 or a variant thereof is used as the diagnostic protocol.

8. Device for a vehicle-related telematics service, having a terminal (4) which is arranged in a vehicle and which has a communications link (3) to a CPU (7), and the telematics service is divided into component functionalities, **characterized in that** the terminal (4) comprises a communications module (4c) via which it is connected to a bus system in the motor vehicle for transmitting data to control units, and **in that** the telematics service is divided in such a way that time-critical functionalities for whose data transmission there are prescribed chronological requirements run on the bus system in the vehicle (4), while functionalities of a vehicle-specific service protocol, for example a diagnostic protocol, are exported to the CPU (7).

9. Device according to Claim 8, wherein the CPU (7) communicates with the terminal (4) via an air interface (3), **characterized in that** the telematics service is remote diagnostics performed on a motor vehicle, the diagnostic protocol being implemented in the CPU (7).

10. Device according to one of the preceding claims, wherein the terminal (4) communicates with the CPU (7) via an air interface (3), said terminal (4) comprising a further interface (5) with which it is connected to a unit (6) on which diagnostics are to be performed, **characterized in that** the terminal (4) comprises a sequencing controller which is autonomous with respect to the CPU (7) and which maintains the diagnostic communication in the vehicle.

11. Computer program with program code means for carrying out all the steps of any one of Claims 1 to 7 when the program is executed on a computer.

12. Computer program product with program code means which are stored on a computer-readable data carrier in order to carry out the method according to any one of Claims 1 to 7 when the program product is executed on a computer.

## Revendications

1. Procédé appliqué à un service de télématique concernant un véhicule comprenant un terminal (4) installé dans un véhicule et établissant une liaison (3) avec un calculateur central (7),
- le service de télématique étant subdivisé en fonctionnalités partielles, **caractérisé en ce que**
- le terminal (4) est relié par un module de communication (4c) à un système de bus dans le véhicule pour transmettre les données vers les appareils de commande et
- le service de télématique est réparti de façon que des fonctionnalités critiques dans le temps pour lesquelles existent des conditions de temps, prédéterminées pour la transmission des données, soient traitées par le système de bus du véhicule et que les fonctionnalités d'un protocole de service, spécifique au véhicule (par exemple un protocole de diagnostic) soient déportées vers le calculateur central (7).

2. Procédé selon la revendication 1,
**caractérisé en ce que**
les fonctionnalités partielles pour le transport de données critiques dans le temps sur le système de bus se déroulent de manière autonome dans le terminal (4), et les fonctionnalités partielles du protocole de service spécifique au véhicule sont exécutées par le calculateur central (7) communiquant avec le terminal.

3. Procédé selon l'une des revendications précédentes,
**caractérisé en ce que**
la communication avec un appareil de commande (6) à diagnostiquer et/ou un composant à diagnostiquer est implémentée dans le terminal (4).

4. Procédé selon l'une des revendications précédentes,
**caractérisé en ce que**
le service de télématique est un télédiagnostic d'un véhicule et le protocole de diagnostic est implémenté dans le calculateur central (7).

5. Procédé selon l'une des revendications précédentes,
**caractérisé en ce que**
l'ordre du protocole de diagnostic spécifique au véhicule est transmis par une interface aérienne (3), du calculateur central (7) vers le terminal (4).

6. Procédé selon l'une des revendications précédentes,
**caractérisé en ce que**
le terminal (4) convertit les ordres de diagnostic transmis vers le réseau du véhicule et transmet les informations en réponse vers l'interface de radio mobile.

7. Procédé selon l'une des revendications précédentes,
**caractérisé en ce qu'**
on utilise le protocole de diagnostic KWP2000 ou une variante de celui-ci.

8. Dispositif de service télématique de véhicule comportant un terminal (4) installé dans un véhicule automobile et qui comporte une liaison (3) avec un calculateur central (7), et le service de télématique est subdivisé en fonctionnalités partielles,
**caractérisé en ce que**
- le terminal (4) comporte un module de communication (4c) qui le relie à un système de bus dans le véhicule pour transmettre des données vers les appareils de commande et
- le service de télématique est divisé de façon que les fonctionnalités critiques dans le temps pour lesquelles il y a des conditions de temps prédéterminées pour la transmission des données, s'effectuent sur le système de bus dans le véhicule et que les fonctionnalités d'un protocole de service spécifique au véhicule, par exemple, un protocole de diagnostic, soient déportées vers le calculateur central (7).

9. Dispositif selon la revendication 8 dans lequel le calculateur central (7) communique avec le terminal (4) par une interface aérienne (3),
**caractérisé en ce que**
le service de télématique est un service de télédiagnostic de véhicule et le protocole de diagnostic est implémenté dans le calculateur central (7).

10. Dispositif selon l'une des revendications précédentes, selon lequel le terminal (4) communique avec le calculateur central (7) par une interface aérienne (3) et comprend d'autres interfaces (5) pour être relié à une unité à diagnostiquer (6),
**caractérisé en ce que**
le terminal (4) comporte une commande d'exécution autonome par rapport au calculateur central (7) et qui maintient la communication de diagnostic dans le véhicule.

11. Programme d'ordinateur comportant des moyens de code de programme pour exécuter toutes les étapes de l'une quelconque des revendications 1 à 7 lorsque le programme est exécuté sur un ordinateur.

12. Produit comme programme d'ordinateur comportant des moyens de code de programme enregistrés en mémoire dans un support de données lisible par un ordinateur pour exécuter le procédé selon l'une quelconque des revendications 1 à 7 lorsque le produit de programme est exécuté sur un ordinateur.
